# EUROPÄISCHE PATENTSCHRIFT

(11) **EP 3 565 776 B1**
(45) Veröffentlichungstag und Bekanntmachung des Hinweises auf die Patenterteilung: **11.01.2023**
(21) Anmeldenummer: 17791065.0
(22) Anmeldetag: 26.10.2017
(51) Int. Cl.: B65G 47/84, B65G 21/06, B65G 21/20

(54) **BEHÄLTERTRANSPORTANLAGE MIT EINEM AUSWECHSELBAREN BAHNELEMENT**
CONTAINER TRANSPORT SYSTEM WITH A REPLACEABLE TRACK ELEMENT
INSTALLATION DE TRANSPORT DE RÉCIPIENTS AVEC UN ÉLÉMENT DE TRAJECTOIRE ÉCHANGEABLE

(30) Priorität: 04.01.2017 DE 102017100092
(43) Veröffentlichungstag der Anmeldung: 13.11.2019
(73) Patentinhaber: KHS GmbH, 44143 Dortmund (DE)
(72) Erfinder: MALLITZKI, Nils, 55469 Simmern (DE); FAHLDIECK, Andreas, 55743 Idar-Oberstein (DE)
(86) Internationale Anmeldenummer: PCT/EP2017/077394
(87) Internationale Veröffentlichungsnummer: WO 2018/127310

(56) Entgegenhaltungen:
- WO-A1-2015/104125
- DE-U1-202014 104 778

## Beschreibung

Die Erfindung betrifft eine Behältertransportanlage mit einem auswechselbaren Bahnelement mit einer oberen und unteren Bahnelementebene zum Führen von Behältern.

Behältertransportanlagen werden beispielsweise in Behälterbehandlungsanlagen eingesetzt und führen die zu behandelnden Behälter, beispielsweise Getränkebehälter, durch die Behälterbehandlungsanlage hindurch. Hierzu kann sie sowohl starre Bahnelemente, d.h. Bahnelemente, an denen die Behälter entlang gleiten, oder auch rotative Bahnelemente, d.h. Bahnelemente, in denen die Behälter transportiert werden, aufweisen.

Aufgrund der Vielzahl von unterschiedlichen Behälterarten, die üblicherweise in einer Behälterbehandlungsanlage bearbeitet werden, ist es notwendig, dass die Bahnelemente in der Behältertransportanlage auswechselbar angeordnet sind.

Aufgrund häufig auftretender Beschädigungen an den Behältern, insbesondere bei Glasbehältern wie Glasflaschen, sollten die Bahnelemente auch möglichst unempfindlich gegenüber auslaufenden Getränken oder den entstehenden Glassplittern sein.

Um unnötige Standzeiten der Behälterbehandlungsanlage aufgrund eines Bahnelementwechsels oder einer Reinigung zu vermeiden, sollten die Bahnelemente besonders schnell und einfach ausgewechselt werden können. Zudem müssen neben den Bahnelementen auch die dazu verwendeten Befestigungsvorrichtungen besonders einfach und ohne großen Zeitaufwand zu reinigen sein und trotzdem eine sichere Befestigung der Bauelemente im Betrieb der Behälterbehandlungsanlage gewährleisten.

Aus der anmeldereigenen WO 2015/104125 sind Befestigungsvorrichtungen für Bahnelemente mit einer oberen und unteren Bahnelementebene bekannt, die die untere Bahnelementebene mit einem Trägerelement einer Behälterbehandlungsanlage verbinden. Die Befestigungsvorrichtung ist als reine Reibvorrichtung ausgebildet, die mit einem Reibkopf an der oberen Bahnelementebene verrastet wird und mittels eines Reibfußes die untere Bahnelementebene am Trägerelement fixiert. Insbesondere aufgrund von Vibrationen im Betrieb der Maschine und aufgrund häufiger Wechsel der Formatteile ist bei der, durch die WO 2015/104125 vorgestellten Vorrichtung ist die Verbindung durch Abnutzungserscheinungen an der Reibvorrichtung und dem Trägerelement geschwächt, so dass eine für den Betrieb notwendige sichere und feste Fixierung mit zunehmender Nutzungsdauer immer schwieriger herstellbar ist. WO 2015/104125 A1 offenbart eine Behältertransportanlage nach dem Oberbegriff des Anspruchs 1.

Der Erfindung liegt somit die Aufgabe zu Grunde, eine Behältertransportanlage mit einer verbesserten Verbindungsvorrichtung für die Bahnelemente bereitzustellen.

Die Aufgabe wird gelöst durch eine Behältertransportanlage mit den Merkmalen des Anspruchs 1, vorteilhafte Weiterbildungen der Erfindung sind in den abhängigen Ansprüchen angegeben. Dabei sind alle beschriebenen Merkmale für sich oder in beliebiger Kombination grundsätzlich Gegenstand der Erfindung, unabhängig von ihrer Zusammenfassung in den Ansprüchen oder deren Rückbeziehung.

Die erfindungsgemäße Behältertransportanlage weist ein an einem Trägerelement auswechselbar befestigbares Bahnelement zum Führen von Behältern mit
a) mindestens einer oberen und einer unteren Bahnelementebene und
b) einer zwischen mindestens zwei Stellungen drehbar um eine Drehachse an dem Bahnelement gelagerten, einen Reibkörper aufweisende Reibvorrichtung, wobei in einer ersten Stellung die untere Bahnelementebene mit dem Trägerelement in Richtung der Drehachse fixiert und in einer zweiten Stellung das Bahnelement von dem Trägerelement in Richtung der Drehachse entnehmbar ist, und
c) einer Spannvorrichtung zum Verspannen der Reibvorrichtung, wobei die Spannvorrichtung eine Torsionsspannung an dem Reibkörper der Reibvorrichtung in Richtung der ersten Stellung erzeugt.

Der Erfindung liegt die Erkenntnis zugrunde, dass die Kopplung des Bahnelementes an der Behältertransportanlage über Reibvorrichtungen erfolgen muss, die das Bahnelement mit der Behältertransportanlage verbinden, die möglichst einfach ausgestaltet sind, um so eine schnelle und einfache Demontage bzw. Montage des Bahnelementes und ein besonders einfaches Reinigen der Bauteile zu ermöglichen, und die zudem verspannt **und/oder** vorgespannt sind, um eine Lockerung der Reibvorrichtungen und somit der Bahnelemente aufgrund von im Betrieb auftretenden Vibrationen oder aufgrund von Abnutzungserscheinungen zu verhindern. Letztlich muss die zur Kopplung vorgesehene Reibvorrichtung besonders einfach zu erreichen und insbesondere händisch bedienbar sein, da die engen Bauräume oftmals den Einsatz von zusätzlichem Werkzeug deutlich erschweren.

Unter Bahnelementen werden im Zusammenhang mit der Erfindung beispielsweise Formatteile, die auf einzelne Getränkebehälter abgestimmt sind, verstanden. Hierzu gehören starre Formatteile, an denen die Behälter entlang gleiten. Dies können sowohl lineare, also gradlinige Elemente als auch Bahnelemente mit Krümmung sein. Auch werden unter Bahnelementen rotative Elemente verstanden, die eine (aktive) Beförderung des Behälters bewirken. Hierzu gehören beispielsweise angetriebene sternförmige Bahnelemente.

Aufgrund der äußeren Konturen und der möglichen Höhen der Behälter weisen die Bahnelemente zumeist mehrere Bahnelementebenen auf, die in Kontakt mit den Behältern, insbesondere auch Getränkeflaschen oder Getränkedosen kommen. Unter Bahnelementebenen werden zumeist flächig ausgebildete Bauteile verstanden, die an einer Außenkante zum Kontakt mit dem Getränkebehälter ausgebildet sind. Von der Erfindung umfasst sind auch ausdrücklich Bahnelemente, die neben der unteren und oberen Bahnelementebene noch eine oder mehrere mittlere Bahnelementebenen aufweisen.

Unter der Drehbarkeit der Reibvorrichtung wird verstanden, dass die Reibvorrichtung um eine insbesondere in Z-Richtung des Bahnelementes ausgerichtete eigene Drehachse drehbar ist. Im montierten Zustand, beispielsweise am Bahnelement, kann die Reibvorrichtung mindestens zwei verschiedene Stellungen einnehmen, nämlich eine erste Stellung und eine zweite Stellung. Dabei kann die Reibvorrichtung insbesondere derart angeordnet sein, dass diese zumindest zwischen der ersten und zweiten Stellung vor- und zurückdrehbar ist.

Unter der ersten Stellung wird insbesondere eine Verriegelungsstellung verstanden, in der die Reibvorrichtung ein Abheben des Bahnelementes von dem Trägerelement in Drehachsenrichtung der Reibvorrichtung verhindert. Dementsprechend ist auch eine Montage des Bahnelementes mit einer Reibvorrichtung an dem Trägerelement in einer ersten Stellung nicht möglich. Zusätzlich liegt in der ersten Stellung eine Torsionsspannung bzw. ein Drehmoment an der Reibvorrichtung an, d.h. eine um die eigene Drehachse (Z-Achse) wirkende Drehspannung, die zumindest in dem Abschnitt der Reibvorrichtung wirkt, mit dem das untere Bahnelement an dem Trägerelement befestigt wird.

Unter der zweiten Stellung wird eine Entriegelungsstellung verstanden, in der das Bahnelement an dem Trägerelement montierbar und/oder demontierbar ist, d.h., ein montiertes Bahnelement kann in der zweiten Stellung in Richtung der Drehachse (Z-Achsenrichtung) von dem Trägerelement entnommen werden. Vorzugsweise liegt zwischen der ersten Stellung, d.h. der Verriegelungsstellung, und der zweiten Stellung, d.h. der Entriegelungsstellung, ein Drehwinkel von ca. 90° vor, wobei auch beispielsweise zwei Verriegelungsstellungen und zwei Entriegelungsstellungen vorliegen können, die abwechselnd einen Drehwinkel von 90° zueinander aufweisen. Auch kann die Reibvorrichtung frei, d.h. in einem Winkel von 360° drehbar gelagert sein, wobei sie mindestens die erste und zweite Stellung einnehmen kann.

Die Fixierung der unteren Bahnelementebene an dem Trägerelement mittels der Reibvorrichtung erfolgt insbesondere formschlüssig. Dabei übt die Reibvorrichtung insbesondere einen Spanndruck auf die untere Bahnelementebene und das Trägerelement aus.

Unter einem Trägerelement wird insbesondere ein Bauteil der Getränketransportanlage verstanden, auf dem sich ein Bahnelement zumindest in Z-Achsenrichtung, d.h. vertikal abstützt. Das Trägerelement kann flächig, beispielsweise plattenförmig ausgebildet sein. Auch kann das Trägerelement mehrere Bauteile umfassen. So kann es bspw. ein flächiges oder plattenförmiges, zur Anlage am Bahnelement ausgebildetes Bauelement, bspw. eine Tragspange aufweisen, die mit einem Tragzapfen verbunden ist, der zum Befestigen an einer Behälterbehandlungsanlage vorgesehen ist.

Unter einer Spannvorrichtung wird eine Vorrichtung verstanden, die eine Torsionsspannung an der Reibvorrichtung erzeugt, wobei die Torsionsspannung ein Drehmoment erzeugt, das einer Bewegung entgegenwirkt, die von der ersten Stellung in die zweite Stellung eines die untere Bahnelementebene an dem Trägerelement fixierenden Abschnittes der Reibvorrichtung, beispielsweise des Reibfußes, gerichtet ist. Die Spannvorrichtung erzeugt somit an dem die untere Bahnelementebene an dem Trägerelement fixierenden Abschnittes der Reibvorrichtung einen Pressdruck bzw. eine Vorspannung in Richtung der ersten Stellung der Reibvorrichtung. Dieses Drehmoment bewirkt somit ein permanentes und spielfreies Anliegen des Reibkörpers am Trägerelement.

Die Reibvorrichtung ist besonders bevorzugt mehrteilig ausgebildet und weist neben dem Reibkörper, einen Reibkopf und/oder Reibfuß auf. Dabei sind der Reibkörper und der Reibfuß vorzugsweise, aber nicht zwingend, einstückig ausgebildet und beispielsweise aus einem flächigen Werkstück, wie einem Metallblech ausgeformt, wodurch die Reinigbarkeit besonders einfach ist. Der Reibkopf bildet vorzugsweise ein Griffelement aus. Er kann zum Aufstecken auf ein dem Reibfuß gegenüberliegendes freies Ende des Reibkörpers ausgebildet sein. Der Reibkopf ist insbesondere als Spritzgussteil beispielsweise aus Kunststoff ausgebildet.

Bezüglich der Spannvorrichtung ist erfindungsgemäß vorgesehen, dass die Spannvorrichtung mindestens ein Federelement zum Erzeugen bzw. zur Aufrechterhaltung der Torsionsspannung umfasst.

Während des Befestigens des auswechselbaren Bahnelements an dem Trägerelement wird die Reibvorrichtung 6 durch das Bedienungspersonal von der zweiten in die erste Stellung gedreht.

Dabei sind die Abmessungen der Bauteile so gewählt, dass die oberen Reibnasen 33, 32 während dieser Drehbewegung zur Anlage an mindestens einer Anlagefläche 46a, 46b der Tragspange 46 kommt, bevor die Rastelemente - bei weiterer Drehbewegung der Verdrehsicherung 30 - in die Rastaufnahmen einrasten.

Mehr im Detail ist somit der, bei der Verriegelung ausgeführte Drehwinkel der in den Rastaufnahmen eingerasteten Rastelemente größer als der Drehwinkel der unteren und oberen Reibnasen 33, 32. Vorzugsweise unterscheiden sich die Drehwinkel nur geringfügig.

Dabei erfährt das mindestens eine vorgesehene Federelement eine elastische Verformung mittels der eine Torsionsspannung oder Vorspannung erzeugt wird, wobei diese ausgehend von den Rastaufnahmen über die Rastelemente, die erste Reibvorrichtung, den Reibkörper und die Reibnasen auf die Anlagefläche der unteren Reibnase wirkt.

Für die Ausbildung des Federelements gibt es viele Möglichkeiten. Beispielhaft, aber nicht beschränkend werden nachfolgend mehrere Möglichkeiten erörtert.

### Federelement im Reibkörper 12

In einer Ausführungsform der vorliegenden Erfindung ist vorgesehen, dass das mindestens eine Federelement innerhalb des Reibkörpers 12 ausgebildet ist.

Dazu sind die Abmessungen der Länge und/oder des Querschnitts des Reibkörpers so gewählt, dass eine elastische Verdrehung des unteren Endes des Reibkörpers relativ zu seinem oberen Ende um einen bestimmten, gewünschten Drehwinkel ein bestimmtes gewünschtes Drehmoment erfordert und somit eine entsprechende Torsionsspannung oder Vorspannung erzeugt.

Beispielsweise kann der Querschnitt des Reibkörpers Bereiche mit einer Verjüngung aufweisen, was bei identischem Drehmoment einen größeren Drehwinkel ermöglicht.

Alternativ oder auch ergänzend kann der Reibkörper auch aus mindestens zwei Teilen bestehen, wobei die beiden Teile des Reibköpers mittels eines weiteren Elementes aus einem unterschiedlichem Material, beispielsweise einem Kunststoffmaterial, verbunden werden.

Dabei ist es von Vorteil, wenn das weitere Element eine größere Elastizität aufweist als die mindestens zwei Teile des Reibkörpers, da auf diese Weise bei konstantem Drehmoment leicht ein größerer Drehwinkel erzielt werden kann.

Alternativ oder auch ergänzend kann das mindestens eine Federelement auch innerhalb des Reibfußes 13 ausgebildet sein.

Auch die Abmessungen des Reibfußes 13 können so gewählt werden, dass die für die Ausbildung eines Federelementes erforderliche elastische Drehverformung innerhalb des Reibfußes 13 erfolgen kann.

Alternativ oder auch ergänzend kann das mindestens eine Federelement auch innerhalb des Reibkopfes 11 ausgebildet sein.

Dabei ist das Federelement besonders bevorzugt an einem Grundkörper des Reibkopfes und einer Lagerführung des Reibkopfes befestigt, so das beim Erzeugen der Torsion im Federelement der Grundkörper einen größeren Drehwinkel gegenüber der Lagerführung durchläuft. Besonders bevorzugt sind zwei Federelemente am Reibkopf angeordnet. Diese können beispielsweise um eine Längsachse, beispielsweise die Drehachse, diametral zueinander angeordnet sein.

Zur Verbesserung der Reinigbarkeit des Reibkopfes ist nach einer Weiterbildung der Erfindung vorgesehen, dass das Federelement beabstandet zu einem freien Ende des Reibkörpers angeordnet ist. D.h. dass zwischen dem Federelement und dem freien Ende des Reibkörpers, das in dem Reibkopf angeordnet ist, eine Lücke ausgebildet ist. Bei der Anordnung von mehr als einem Federelement, beispielsweise bei zwei Federelementen weist jedes der Federelemente dementsprechend eine Lücke zum freien Ende des Reibkörpers auf. Neben der verbesserten Reinigbarkeit des Reibkopfes wird hierdurch auch die Verdrehbarkeit der Federelemente erleichtert.

Zum Fixieren der unteren Bahnelementebene an dem Trägerelement weist die Reibvorrichtung besonders bevorzugt eine obere Reibnase und eine untere Reibnase auf, wobei die obere Reibnase zum Eingriff an der Oberseite der unteren Bahnelementebene und die untere Reibnase zum Eingriff an der Unterseite des Trägerelementes ausgebildet und angeordnet sind.

Unter einer Reibnase wird ein aus der Reibvorrichtung (oder dem Reibkörper/Reibfuß) herausragender Vorsprung oder eine in die Reibvorrichtung (oder den Reibkörper/Reibfuß) eingebrachte Ausnehmung verstanden. Dabei ist die obere Reibnase derart ausgebildet und angeordnet, dass sie in der ersten Stellung mit einem zur unteren Reibnase ausgerichteten Abschnitt an die Oberseite des unteren Bahnelementes angreift (in Kontakt ist), während die untere Reibnase derart ausgebildet und ausgerichtet ist, dass sie mit einem Abschnitt an die Unterseite des Trägerelementes angreift, bzw. mit dieser in Kontakt ist oder sich an dieser abstützt.

Bevorzugt ist der Abschnitt an die Unterseite des Trägerelementes zur Reibnase ausgerichtet und so ausgebildet, dass die Reibnase stufenlos gegen die schräg zur Horizontalen angeordnete Unterseite angedreht bzw. aufgeschoben werden kann.

Die Reibnasen sind insbesondere einstückig mit dem Reibkörper oder Reibfuß ausgebildet.

Die untere Bahnelementebene und das Trägerelement, welche insbesondere beide plattenförmig, d.h. flächig ausgebildet sind, werden somit zwischen der oberen und der unteren Reibnase fixiert. Dabei können die untere Bahnelementebene und das Trägerelement durch die Reibnasen miteinander verspannt werden. Folglich ist die Fixierung zwischen dem Trägerelement und der unteren Bahnelementebene beispielsweise als formschlüssige Verbindung ausgebildet.

Mehr im Detail ist nach einer Weiterbildung der Erfindung vorgesehen, dass an der Unterseite des Trägerelements eine zur Drehachse Z der Reibvorrichtung schräg ausgerichtete Anlagefläche zur Anlage der unteren Reibnase des Reibfußes angeordnet ist. Unter einer schrägen Anlagefläche wird ein Abschnitt des Trägerelementes verstanden, der zum Kontakt mit einer Anlagefläche an den unteren Reibnasen ausgebildet ist. Bei der Anordnung von bspw. zwei diametral um die Drehachse angeordneten unteren Reibnasen weist das Trägerelement ebenfalls zwei Anlageflächen auf, wobei eine der Anlageflächen sich in Vertikalrichtung nach oben in Richtung des Reibkopfes und die andere Anlagefläche in entgegengesetzte Richtung vertikal nach unten, d.h., in Richtung der Anlagefläche der Reibnase erstreckt. Dabei kann auch eine schraubenförmige Fläche, bzw. ein Gewindegang ähnlicher Verlauf der Fläche vorgesehen sein. Insgesamt können diese Anlageflächen ebenfalls gegenüber der Horizontalen geneigt sein, oder aber auch horizontal angeordnet sein.

Das Verhältnis der Richtungsanteile quer zur Drehachsenrichtung Z (horizontal) und in Drehachsenrichtung Z (vertikal) ist bei der schrägen Anlagefläche mindestens 2:1, bevorzugt mindestens 5:1. D.h., der Winkel zwischen der Drehachsenrichtung Z und der schrägen Fläche beträgt bspw. zwischen 93° bis 100° bzw. zwischen 87° bis 80°. Zusätzlich können an den Kanten der schrägen Flächen Fasen angeordnet sein, wobei angemerkt wird, dass unter einer schrägen Anlagefläche keine Fase verstanden wird.

Nach einer Weiterbildung der Erfindung ist vorgesehen, dass die Reibvorrichtung eine Verdrehsicherung gegen ein unbeabsichtigtes Verdrehen um die Drehachse aufweist. Dabei ist die Verdrehsicherung insbesondere am Reibkopf angeordnet und verhindert das Verdrehen der Reibvorrichtung sowohl in der ersten Stellung als auch in der zweiten Stellung. Die Verdrehsicherung weist besonders bevorzugt ein Rastelement mit einer dazu korrespondierend ausgebildeten Rastelementaufnahme auf. Dabei kann das Rastelement beispielsweise im Bereich eines am Rastkopf angeordneten Sperrriegels angeordnet sein, während die Rastelementaufnahme insbesondere als Ausnehmung im Bereich der oberen Bahnelementebene ausgebildet ist. Die Verdrehsicherung kann ergänzend zur Spannvorrichtung ausgebildet sein, wobei die Spannvorrichtung zusätzlich zur Verdrehsicherung angeordnet ist und wie bereits oben ausgeführt eine Torsionsspannung auf den das Trägerelement und die untere Bahnelementebene verspannenden Abschnitt (beispielsweise Reibfuß) der Reibvorrichtung ausübt.

Durch das sichere Einrasten der Verdrehsicherung wird die vom Bedienungspersonal erzeugte elastische (Dreh)Verformung des mindestens einen Federelementes sicher fixiert, wodurch die gewünschte permanente, die Reibvorrichtung in Richtung der ersten Stellung drückende Vorspannung erzeugt, bzw. aufrecht erhalten wird.

Eine weitere Ausgestaltung der Erfindung sieht die Anordnung mindestens eines Scherbenschutzes an der Reibvorrichtung, beispielsweise im Bereich oberhalb des Reibfußes und/oder oberhalb der Lagerführung vor. Der Scherbenschutz verhindert, dass Glasscherben von zerstörten Glasbehältern in den Bereich der Lagereinheit und/oder den Bereich des Reibfußes eindringen. Ebenfalls zentriert und lagert der Scherbenschutz den unteren Teil der Reibvorrichtung.

Nach einer weiteren Ausgestaltung der Erfindung ist zudem eine Auszugssicherung zur Fixierung der Reibvorrichtung an dem Bahnelement in Drehachsenrichtung angeordnet. Die Auszugssicherung kann als ein Bauteil an der Reibvorrichtung ausgebildet sein, das ein Lösen oder Entfernen der Reibvorrichtung von dem Bahnelement in Drehachsenrichtung und insbesondere nach oben verhindern kann. Hierfür weist die Auszugssicherung beispielsweise mindestens einen Sperrriegel auf, der eine Stützfläche, beispielsweise eine Sperrnase aufweist, die in einer Sperrstellung mit der Unterseite der oberen Bahnelementebene in Kontakt ist.

Alternativ zur Anordnung eines Sperrriegels können beispielsweise auch zwei oder mehr Sperrriegel angeordnet sein, die beispielsweise diametral um die Drehachse der Reibvorrichtung an der Reibvorrichtung angeordnet sind. Hierdurch wird eine besonders sichere Fixierung der Reibvorrichtung am Bahnelement ermöglicht. Dabei wird unter der Sperrstellung die Position verstanden, in der die Entnahme der Reibvorrichtung zumindest in Drehachsenrichtung nach oben von dem Bahnelement blockiert wird. Dementsprechend kann die Reibvorrichtung in der zweiten Stellung und in der Freigabestellung von dem Bahnelement entfernt werden.

Die Auszugssicherung und/oder insbesondere der Sperrriegel können beispielsweise einstückig mit der Reibvorrichtung, insbesondere einstückig mit dem Reibkopf ausgebildet sein. Die Auszugssicherung ist somit für eine besonders schnelle Demontage der Reibvorrichtung vom Bahnelement, beispielsweise um diese zu reinigen, insbesondere als Schnellverschluss ausgebildet. Nach der Entnahme des Reibkopfes können auch die restlichen Bauteile der Reibvorrichtung werkzeuglos entnommen werden, wodurch eine leichte Reinigung ebenfalls vereinfacht wird.

Im Weitern wird die Erfindung anhand mehrerer Ausführungsbeispiele näher beschrieben. Es zeigen:
- Fig. 1: schematisch in einer perspektivischen Darstellung einen Teilabschnitt eines Bahnelementes mit einer Reibvorrichtung in der ersten Stellung;
- Fig. 2: schematisch in einer perspektivischen Darstellung eine Reibvorrichtung mit im Reibkopf angeordneten Federelementen zum Erzeugen einer Torsionsspannung;
- Fig. 3: schematisch in einem Querschnitt die Reibvorrichtung aus Figur 2;
- Fig. 4: in einer perspektivischen Darstellung einen Teilabschnitt eines Bahnelementes mit einem in der oberen Bahnelementebene angeordneten Reibkopf in einer zweiten Stellung;
- Fig. 5: in einer perspektivischen Darstellung einen Teilabschnitt eines Bahnelementes mit dem in der oberen Bahnelementebene angeordneten Reibkopf aus Figur 4 in seiner ersten Stellung;
- Fig. 6: in einer perspektivischen Darstellung den Teilabschnitt eines Bahnelementes aus Figur 5 mit dem Reibkopf in seiner ersten Stellung;
- Fig. 7: in einer perspektivischen Darstellung einen Ausschnitt einer an einem Tragelement verriegelten unteren Bahnelementebene;
- Fig.8a: in einer perspektivischen Darstellung eine außenseitige Ansicht von einer an einer Anlagefläche des Trägerelementes anliegenden unteren Reibnase;
- Fig.8b: in einer perspektivischen Darstellung die Darstellung aus Figur 8a in einer innenseitigen Ansicht.

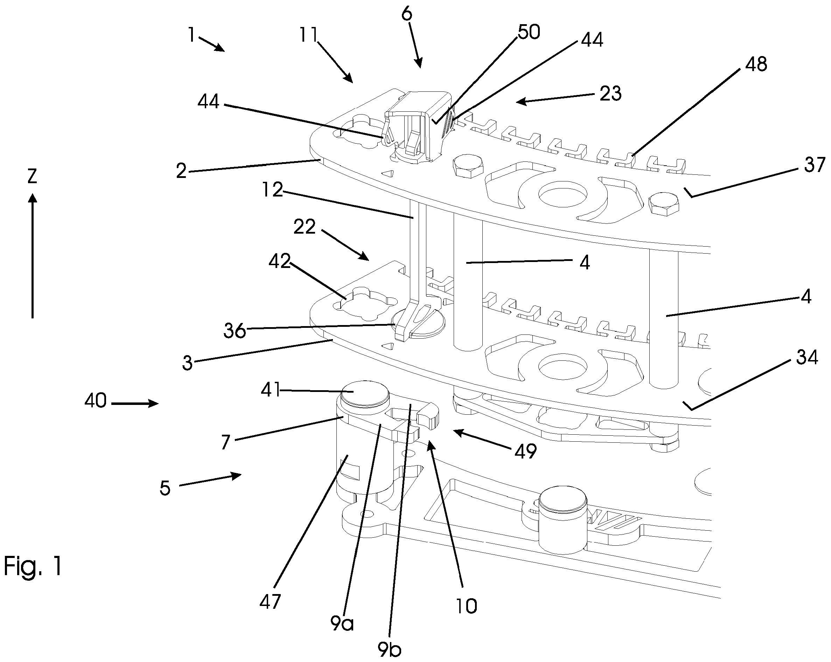

Fig. 1 zeigt schematisch in einer perspektivischen Darstellung einen Teilabschnitt eines starren Bahnelementes 1 zum Führen von Behältern (hier nicht dargestellt). Das Bahnelement 1 weist eine obere Bahnelementebene 2 und eine untere Bahnelementebene 3 auf, die über Abstandshalter 4 miteinander verbunden sind. Unterhalb des Bahnelementes 1 ist ein zum Aufsetzen des Bahnelementes 1 ausgebildetes Trägerelement 5 dargestellt.

Weiter ist eine Reibvorrichtung 6 angeordnet, die zum Fixieren des Bahnelements 1 am Trägerelement 5 in eine Drehachsenrichtung Z nach oben (durch einen Pfeil dargestellt) ausgebildet ist. Die Reibvorrichtung 6 ist in ihrer ersten Stellung dargestellt, d.h., in der dargestellten Anordnung kann das Bahnelement 1 nicht auf das Trägerelement 5 aufgesetzt werden.

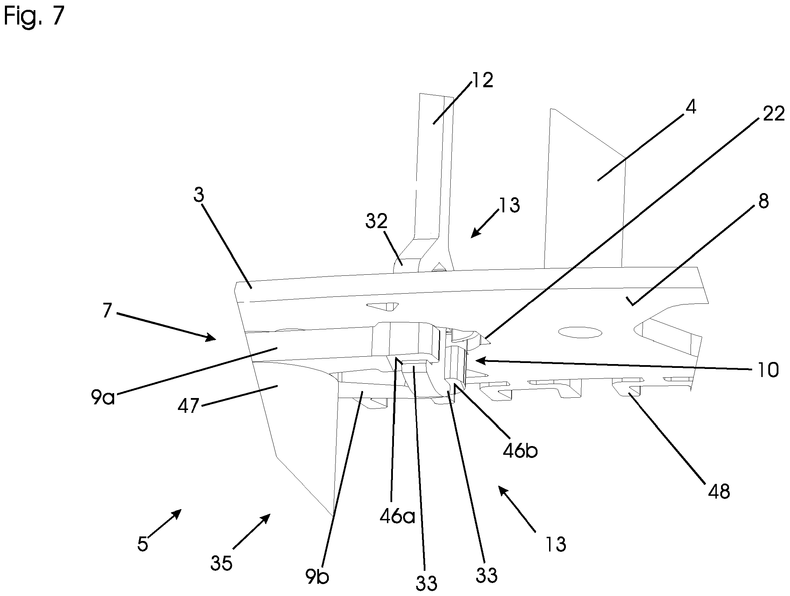

Das Trägerelement 5 ist mehrteilig ausgebildet und weist einen Trägerzapfen 47, der in diesem Fall rund ausgebildet ist, und eine an dem Trägerzapfen 47 angeordnete Trägerspange 7 auf. Die Oberseite 49 der Trägerspange 7 ist zur Anlage an einer Unterseite 8 (siehe Figur 7) der unteren Bahnelementebene 3 vorgesehen. Die Trägerspange 7 weist in dieser Ausführung zwei Aufnahmeschenkel 9a, 9b auf.

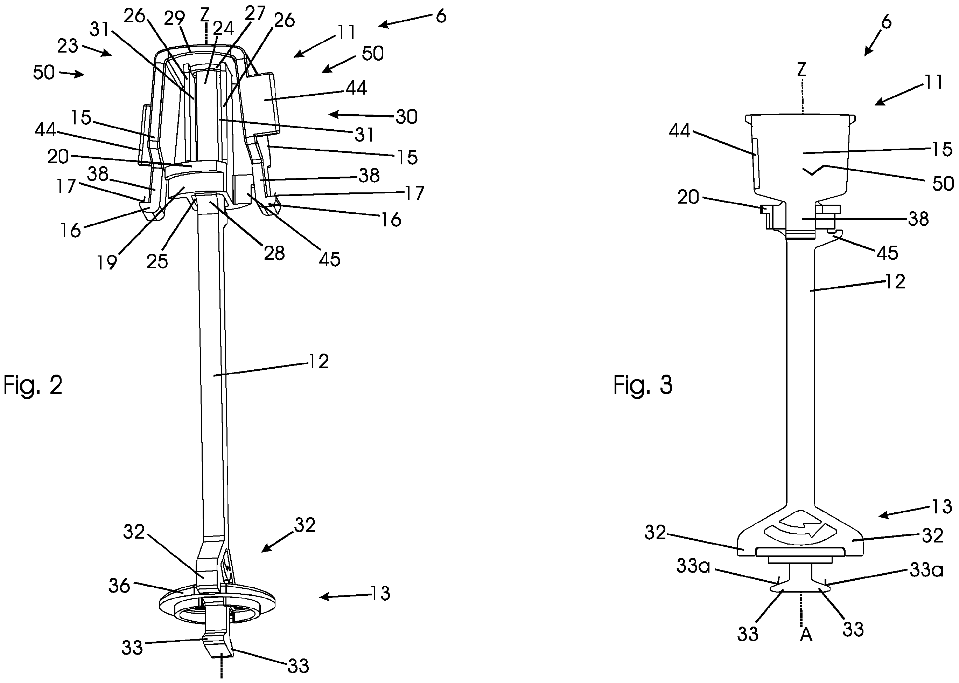

Die Reibvorrichtung 6 weist einen Reibkopf 11, einen Reibkörper 12 und einen Reibfuß 13 auf. Der Reibkopf 11 ist auf den Reibkörper 12 aufgesteckt und kann zur Demontage bzw. Montage der Reibvorrichtung 6 vom Reibkörper 12 abgezogen/aufgesteckt werden. Am Reibkopf 11 ist außerdem eine Spannvorrichtung 23 zum Aufbringen einer Torsionsspannung auf den Reibkörper 12 angeordnet. Zur besseren Handhabung bei der Drehbewegung der Reibvorrichtung 6 sind zudem Laschen 44 am Reibkopf 11 angeordnet. Die Laschen 44 sind flächenbündig mit den Greifflächen 50 des Reibkopfes 11 ausgebildet (siehe Figur 2), können jedoch beispielsweise auch winkelig von den Greifflächen abstehen.

Ferner zeigt Figur 1 eine Positioniervorrichtung 40 mit einem Aufnahmebolzen 41 und einer zur Aufnahme des Aufnahmebolzens 41 in der unteren Bahnelementebene 3 angeordneten Bolzenaufnahme 42 und Geländerträger 48 zur Aufnahme eines Führungsgeländers (hier nicht dargestellt), an dem die Behälter beim Transport entlang gleiten können.

Fig. 2 und 3 zeigen die Reibvorrichtung 6 mit dem Reibkopf 11, dem Reibkörper 12 und dem Reibfuß 13 auf. Der Reibkörper 12 und der Reibfuß 13 sind einstückig ausgebildet, hier aus einem plattenförmigen Metallblech ausgeformt, d.h., sie sind flächig ausgebildet. Am Reibfuß 13 ist zudem ein unterer Scherbenschutz 36 angeordnet.

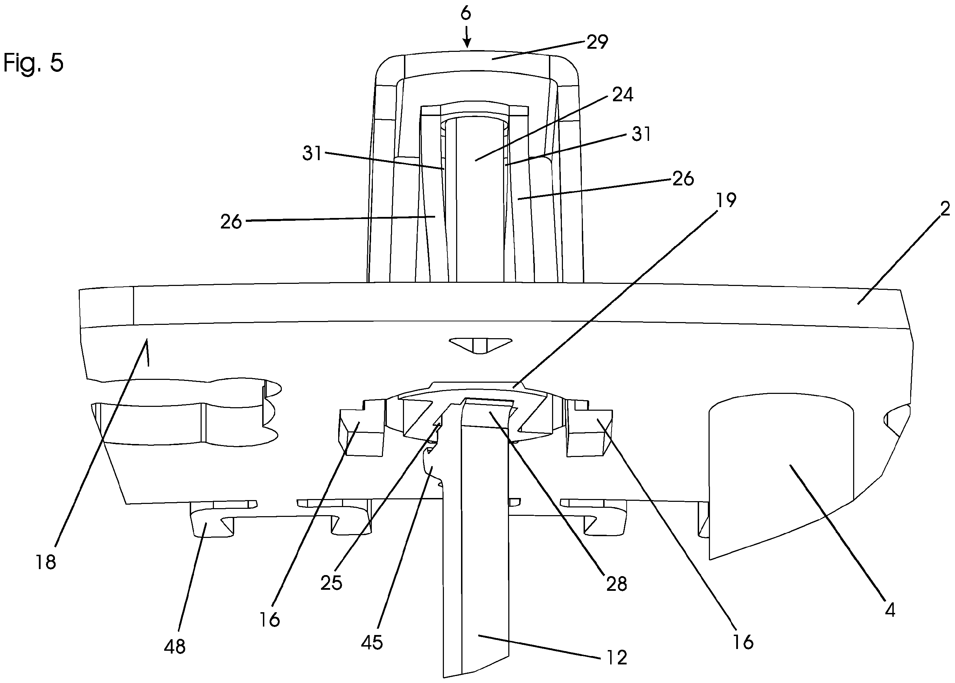

Der Reibkopf 11 ist als Griffelement ausgebildet und weist eine Auszugssicherung 14 auf. Die Auszugssicherung 14 weist hier zwei Sperrriegel 15 auf, die diametral zueinander um eine Drehachse Z der Reibvorrichtung 6 angeordnet sind. Die Sperrriegel 15 weisen jeweils ein freies Ende mit einer Sperrnase 16 auf. Die Sperrnasen 16 weisen eine Stützfläche 17 auf, die zum Abstützen an der Unterseite 18 (siehe Fig. 5) der oberen Bahnelementebene 2 angeordnet und ausgebildet sind. Wird versucht, das Griffelement noch oben aus dem oberen Bahnelement zu ziehen, so stützen sich die Stützflächen 17 sowohl in der ersten Stellung als auch in der zweiten Stellung an der Unterseite 18 der oberen Bahnelementebene 2 ab und verhindern das Ausziehen des Reibkopfes 11 bzw. der Reibvorrichtung 6 aus dem Bahnelement 1.

Die Sperrriegel 15 sind mit dem den Sperrnasen 17 gegenüberliegenden Ende fest mit einem Grundkörper 29 des Reibkopfes 11 verbunden. Folglich sind die Sperrriegel 15 federnd gelagert und können quer zur Drehachse Z aus ihrer dargestellten Position bewegt werden. Dabei können sie insbesondere in Richtung auf die Drehachse Z zu bewegt werden. D.h., die Sperrriegel 15 können beispielsweise händisch zusammengedrückt werden. Auch wenn die Bewegungsbahn der Sperrriegel 15 dabei entlang eines Kreisbogenabschnitts erfolgt, wird unter dieser Bewegung eine Bewegung quer zur Drehachse Z verstanden.

Des Weiteren sind am Reibkopf 11 eine Lagerführung 19 und ein oberer Scherbenschutz 20 angeordnet. Im montierten Zustand deckt der obere Scherbenschutz 20 eine obere Ausnehmung 21 in der oberen Bahnelementebene 2 zumindest teilweise ab, so dass das Eindringen von Fremdkörpern in den Bereich der Lagerführung 19 des Reibkopfes 11 bzw. in den Bereich einer Verdrehsicherung 30 im Wesentlichen verhindert wird.

Die Lagerführung 19 ist auf die Ausnehmung 21 in der oberen Bahnelementebene 2, die identisch zu einer Ausnehmung 22 in der unteren Bahnelementebene 3 ausgebildet ist, abgestimmt.

Das dem Reibfuß 13 gegenüberliegende freie Ende 24 des Reibkörpers 12 ist zum Einführen in den Reibkopf 11 ausgebildet. Dabei weist die Lagerführung 19 eine auf den Querschnitt des Reibkörpers 12 angepasste Ausnehmung 25 auf, durch die das freie Ende 24 in den Reibkopf 11 eingeführt und an einer innenseitigen Aufnahme 27 des Grundkörpers 29 drehbar gelagert ist. Der Reibkörper 12 ist mit einem Steg 28 formschlüssig mit der Lagerführung 19 verbunden.

Der Reibkopf 11 ist hier aus einem Kunststoffspritzteil ausgebildet und umfasst zur Spannvorrichtung 23 gehörende Federelemente 26. Die Federelemente 26 sind mit dem Grundkörper 29 und der Lagerführung 19 verbunden und zum freien Ende 24 des Reibkörpers 12 beabstandet angeordnet, d.h., zwischen den Federelementen 26 und dem freien Ende 24 des Reibkörpers 12 ist eine Lücke 31 ausgebildet, um ein sicheres Verdrehen der Federelemente 26 zu gewährleisten und die Reinigbarkeit zu verbessern.

An dem, dem Reibkopf 11 gegenüberliegenden Ende des Reibkörpers 12 ist der Reibfuß 13 einstückig mit dem Reibkörper 12 ausgebildet und somit ebenfalls flächig ausgeformt. Der Reibfuß 13 weist zwei obere Reibnasen 32 und zwei untere Reibnasen 33 auf. Die oberen Reibnasen 32 und die unteren Reibnasen 33 sind jeweils diametral um die Drehachse Z zueinander angeordnet. Die oberen Reibnasen 32 sind dazu ausgebildet, an der Oberseite 34 der unteren Bahnelementebene 3 anzugreifen, während die untere Reibnase 33 zum Eingriff an einer Unterseite 35 der Tragspange 7 ausgebildet ist. An die oberen Reibnasen 32 angrenzend und zwischen den oberen und unteren Reibnasen 32, 33 angeordnet ist der untere Scherbenschutz 36, der flächig und rund ausgebildet ist und im montierten Zustand die Ausnehmung 22 in der unteren Bahnelementebene 3 zumindest teilweise abdeckt. Der untere Scherbenschutz 36 verhindert somit das Eindringen von Fremdkörpern in den Bereich der Fixierung des Bahnelementes 1 am Trägerelement 5.

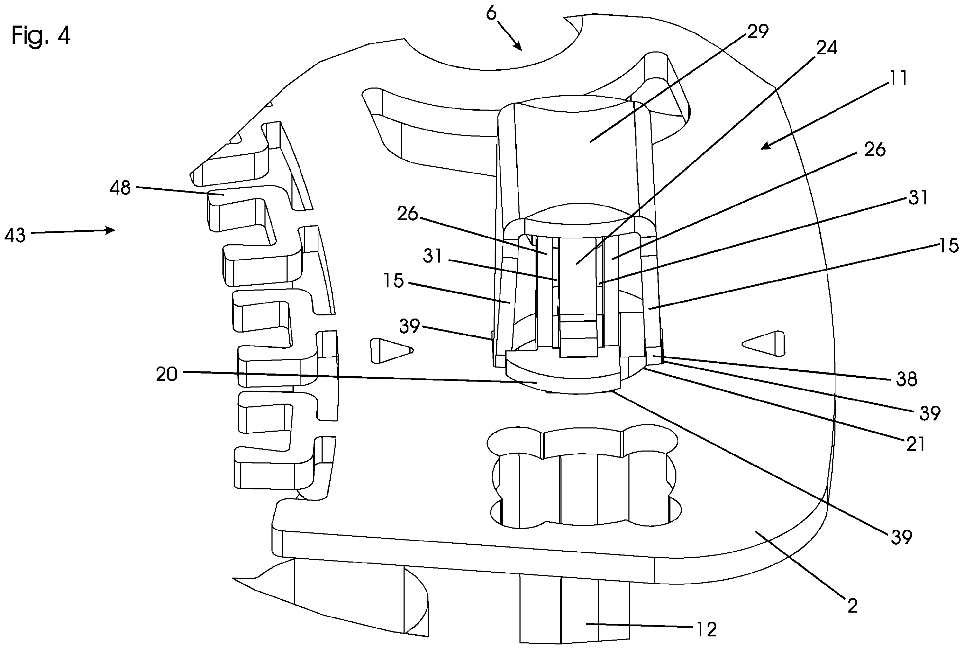

Weiter ist die Verdrehsicherung 30 dargestellt. Hierfür umfassen die Sperrriegel 15 Rastelemente 38 und die Ausnehmung 21 in der oberen Bahnelementebene 2 weist Rastelementaufnahmen 39 (siehe Figur 4) auf, die korrespondierend zu den Rastelementen 38 ausgebildet sind.

Dabei sind vier Rastelementaufnahmen 39 jeweils in einem Winkel von 90° zueinander an der Ausnehmung 21 angeordnet und derart zur Reibvorrichtung 6 ausgerichtet, dass die Rastelemente 38 sowohl in der ersten Stellung der Reibvorrichtung 6 als auch in ihrer zweiten Stellung in die Rastelementaufnahmen 39 eingreifen. Hierdurch wird sowohl in der ersten Stellung der Reibvorrichtung 6 als auch in ihrer zweiten Stellung ein Verdrehen der Reibvorrichtung 6 verhindert. Insbesondere auch wird durch die Rastelementaufnahmen auch die Aufrechterhaltung der elastischen Verformung des mindestens einen Federelementes ermöglicht.

Bevorzugt wird der Reibkörper 12 bei der Montage von unten durch die Ausnehmung 21 der oberen Bahnelementebene in der oberen Bahnelementebene 2 geführt. Die beiden unteren Reibnasen 33 werden zudem durch die Ausnehmung 22 in der unteren Bahnelementebene 3 hindurchgeführt. Der Reibkopf 11 wird mit seiner Ausnehmung 25 in der Lagerführung 19 auf das freie Ende 24 des Reibkörpers 12 aufgesteckt während die Sperrriegel 15 aufeinander zugedrückt, d.h. in Richtung der Drehachse, bewegt werden. Die Sperrriegel 15 werden abschnittsweise durch die Ausnehmung 21 in die obere Bahnelementebene 2 geführt. Aufgrund der Entspannung der Sperrriegel 15 federn diese zurück in ihre Ausgangsstellung. Durch die Stützflächen 17 in Verbindung mit der Unterseite 18 der Bahnelementebene 2 wird eine Demontage in Drehachsenlängsrichtung (Z) der Reibvorrichtung 6 von dem Bahnelement 1 verhindert.

Im montierten Zustand erstrecken sich die Sperrriegel 15 somit ausgehend von einem Bereich oberhalb der Oberseite 37 der oberen Bahnelementebene 2 durch die Ausnehmung 21 hindurch, so dass sich die Sperrriegel 15 teilweise durch die obere Bahnelementebene 2 erstrecken und die Sperrnasen 16 mit ihren Stützflächen 17 nach dem Entspannen des Pressdrucks auf die Sperrriegel 15 eine Demontage verhindern.

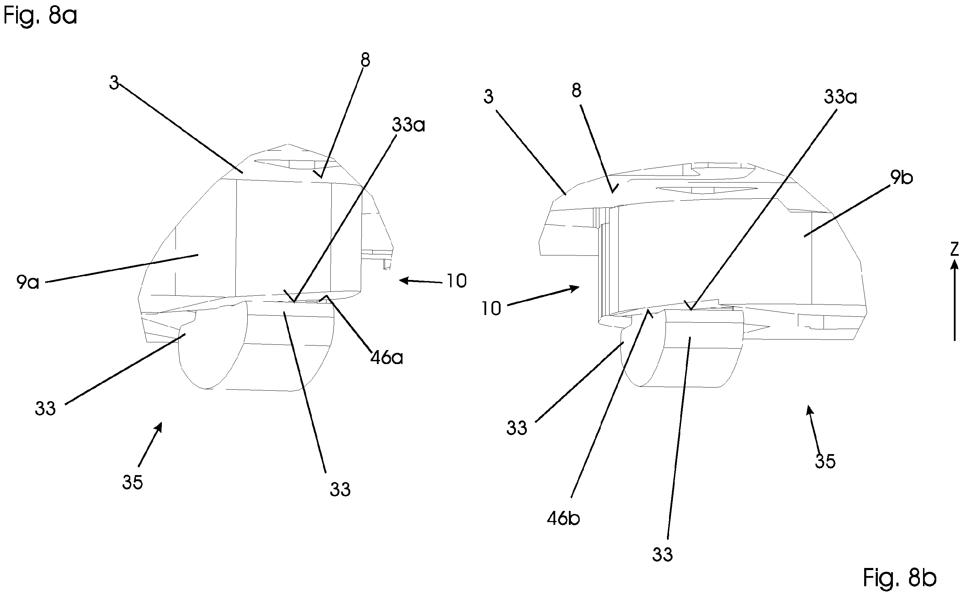

Für eine Verspannung des Bahnelementes 1 an dem Trägerelement 5 sind die oberen und unteren Reibnasen 32, 33 und das Trägerelement 5, hier die Tragspange 7, derart aufeinander abgestimmt, dass beim Drehen der Reibvorrichtung 6 von der zweiten Stellung in die erste Stellung die Tragspange 7 und die untere Bahnelementebene 3 zwischen den oberen und unteren Reibnasen 32, 33 eingeklemmt werden. Hierfür sind an der Tragspange 7 schräg ausgerichtete Anlageflächen 46a, 46b (siehe Figur 7, 8a, 8b) angeordnet, auf die jeweils eine der unteren Reibnasen 33 mit einer Anlagefläche 33a aufgeschoben wird.

Zur Sicherstellung, dass sowohl die Verspannung, als auch die Vorspannung sowohl bei den auftretenden Vibrationen im Betrieb der Behältertransportvorrichtung als auch dauerhaft, d.h. auch nach Vielzahl von Bahnelementwechseln, erhalten bleibt, ist die Spannvorrichtung 23 angeordnet, mittels der eine Torsionsspannung an den Reibkörper 12 angelegt wird und die den Reibkörper 12 in Richtung der ersten Stellung presst.

Im dargestellten Ausführungsbeispiel sind zum Erzeugen der Torsionsspannung die oberen und unteren Reibnasen 32, 33 am Reibfuß 13 und die schräg ausgerichteten Anlageflächen 46a, 46b an der Tragspange 7 gegenüber der Verdrehsicherung 30 bevorzugt versetzt bzw. verdreht ausgerichtet, so dass bei der Drehung der Reibvorrichtung 6 von der zweiten in die erste Stellung die Sperrriegel 15 mit den Rastelementen 38 gegenüber der am Reibkörper 12 angeordneten Lagerführung 19 stärker verdreht werden. Dabei erfahren die am Grundkörper 29 und der Lagerführung 19 angeordneten Federelemente 26 eine Torsion (siehe Figur 4 und 5) mittels der ein Drehmoment bzw. eine Torsionsspannung auf den Reibkörper 12 aufgebracht wird. Zwischen der ersten und zweiten Stellung ist somit der Drehwinkel der in den Rastaufnahmen 39 eingerasteten Rastelemente 38 größer als der Drehwinkel der unteren und oberen Reibnasen 33, 32. Dabei unterscheiden sich die Drehwinkel nur geringfügig, insbesondere im Bereich von 3°-30°. D.h., dass beispielsweise bei einem bevorzugten Drehwinkel der Rastelemente 38 von 90° zwischen der ersten und zweiten Stellung der Drehwinkel der oberen und unteren Reibnasen zwischen der ersten und zweiten Stellung ca. 87°- 60°, bevorzugt 75° beträgt.

Während die Anlageflächen 33a der unteren Reibnasen 33 zur Anlage an dem Trägerelement 5 in den Figuren 2 und 3 schräg dargestellt sind, können diese alternativ auch rechtwinklig, beispielsweise in einem Winkel von 90° +/-2° zur Drehachse Z ausgebildet sein. Hierdurch kann die Abnutzung an den unteren Reibnasen 33 durch häufige Bahnelementwechsel bzw. durch die auftretenden Vibrationen im Betrieb der Behältertransportanlage durch die vergrößerte Kontaktfläche deutlich verringert werden, was die Betriebssicherheit der Vorrichtung noch weiter steigert und somit von großem Vorteil ist. Besonders bevorzugt sind die Anlageflächen parallel oder im Wesentlichen parallel zu den Anlageflächen 46a, 46b verlaufen. Die Reibnasen können also schräg sein, wenn die Anlageflächen 46a, 46b zusätzlich ebenfalls in dieselbe Richtung schräg geneigt sind.

Figur 3 zeigt zudem einen Stützarm 45 zum Abstützen der Reibvorrichtung 6 an der Unterseite 18 der oberen Bahnelementebene 2. Durch diesen Stützarm 45 wird verhindert, dass sich der Reibkörper 12 bei unsachgemäßer Handhabung des demontierten auswechselbaren Bahnelementes unkontrolliert nach oben drücken lässt und somit eventuell beschädigt wird, beispielsweise durch ein Verbiegen der Sperrnasen 16 des Reibkopfes.

Figur 4 zeigt einen Teilausschnitt eines Bahnelementes 1 mit einer oberen Bahnelementebene 2 und einem Abschnitt der Reibvorrichtung 6 aus Figur 2 und 3, wobei der hier dargestellte Reibkopf 11 keine Laschen 44 aufweist. An einer Innenseite 43 sind Geländerträger 44 zum Einführen von Führungsgeländern (hier nicht dargestellt) angeordnet. Die Geländerträger 44 sind identisch zu den Geländerträgern 44 aus Figur 1 und ebenfalls in einer Herstellungsposition dargestellt.

Die Reibvorrichtung 6 ist durch die Ausnehmung 21 im oberen und unteren Bahnelement 1 geführt. Die Reibvorrichtung 6 befindet sich in ihrer zweiten Stellung. Die Rastelemente 38 sind in den Rastaufnahmen 39 eingerastet, so dass eine Entnahme der Reibvorrichtung 6 erst durch ein Zusammendrücken der Sperrriegel 15 möglich ist. Die Federelemente 26 sind gerade und weisen noch keine Verdrehung auf.

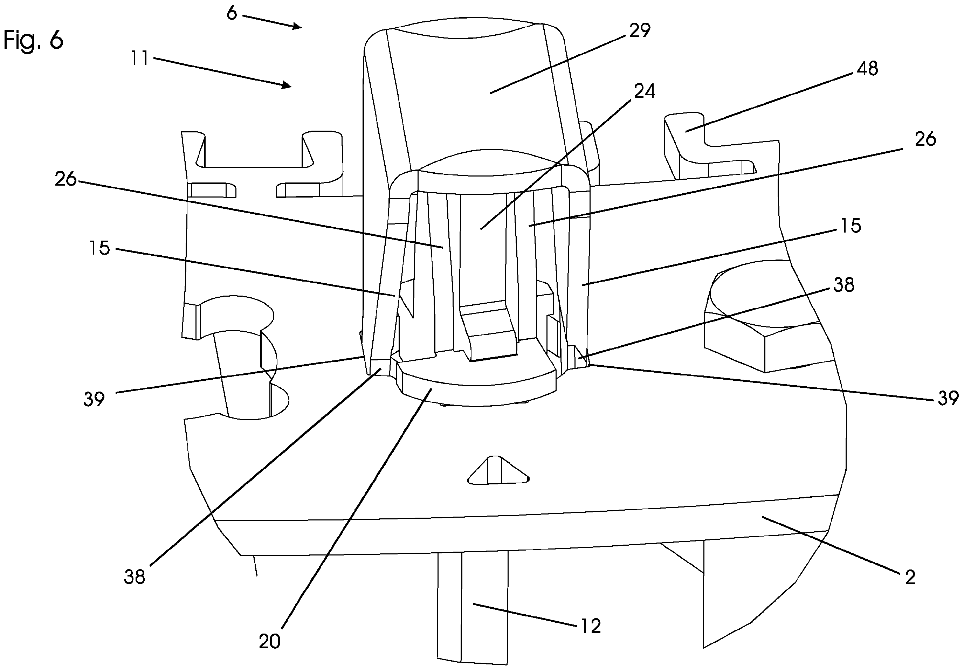

Die Figuren 5 und 6 zeigen den Ausschnitt des Bahnelementes 1 aus Figur 4 in einer perspektivischen Darstellung von unten mit der Reibvorrichtung 6 in der ersten Stellung. Die Reibvorrichtung 6 ist somit gegenüber der Darstellung von Figur 4 im Uhrzeigersinn verdreht. Dabei sind die Rastelemente 38 um 90° verdreht und in den um 90° versetzt angeordneten Rastaufnahmen 39 eingerastet. Die Sperrnasen 16 weisen bevorzugt einen kleinen Abstand von der Unterseite 18 der oberen Bahnelementebene 2 auf.

Aufgrund der Verspannung der unteren und oberen Reibnasen 33, 32 an der Tragspange 7 und der unteren Bahnelementebene 3, die eine Blockierung der Drehbewegung bewirkt, hat der Reibkörper 12 eine gegenüber den Rastelementen 38 geringere Verdrehung, hier ca. eine 80° Drehung gegenüber der Darstellung in Figur 4 durchgeführt. Während die Lagerführung 19 mit dem Reibkörper 12 zumindest weitestgehend undrehbar verbunden ist, erfolgt durch die Verrastung der Rastelemente 38 an den Rastelementaufnahmen 39 eine Verdrehung der Federelemente 26. Die dadurch entstehende Torsionsspannung in den Federelementen 26 wird über die Lagerführung 19 auf den Reibkörper 12 übertragen und presst den Reibkörper 12 in Drehrichtung. D.h., es entsteht eine Torsionsspannung im Bereich des Reibfußes 13 durch die die oberen und unteren Reibnasen 32, 33 auf die schrägen Anlageflächen 46a, 46b an der Tragspange 7 und die untere Bahnelementebene 3 gepresst werden. Hierdurch wird insbesondere eine Lockerung der Verbindung zwischen Bahnelement 1 und Trägerelement 5 durch betriebsbedingte Vibrationen oder durch Abnutzungserscheinungen aufgrund von häufigen Bahnelementwechseln sicher verhindert.

Das sichere Verrasten ermöglicht auch eine stärkere Verdrehung des mindestens einen Federelementes und damit einen größeren Toleranzbereich zum Ausgleichen der Fertigungstoleranzen bzw. eine stärkere Verpressung bzw. Vorspannung. Ebenso wird ein versehentliches Öffnen der Vorrichtung verhindert.

Figur 7 zeigt in einer perspektivischen Darstellung einen Ausschnitt der auf dem Trägerelement 5 aufliegenden unteren Bahnelementebene 3 des Bahnelements 1. Das Trägerelement 5 umfasst den Tragzapfen 47, der mit der Behältertransportanlage (hier nicht dargestellt) verbindbar ist und die Tragspange 7. Die untere Bahnelementebene 3 und die Tragspange 7 des Trägerelements 5 werden mittels des Reibfußes 13 der Reibvorrichtung 6 aneinander gepresst.

Der Reibfuß 13 ragt mit seinen unteren Reibnasen 33 durch eine Ausnehmung 22 und zwischen den Aufnahmeschenkeln 9a, 9b der Tragspange 7 durch. Die Anlageflächen 33a (siehe Figur 8a, 8b) der unteren Reibnasen 33 liegen an den Anlageflächen 46a, 46b der Tragspange 7 an und verspannen das Bahnelement 1 mit der Tragspange 7.

Um eine sichere und einfache Verspannung der Reibnasen 33 an dem Trägerelement 5 zu erreichen, sind die Anlageflächen 46a, 46b der Tragspange 7 angeschrägt. Dabei ist eine der Anlageflächen 46a, 46b gegenüber der anderen der Anlageflächen 46a, 46b in eine umgekehrte Richtung angeschrägt ausgebildet (siehe Figur 8a, 8b).

In den in Figur 7 und Figur 8a dargestellten außenseitigen Ansichten des Bahnelementes 1 verläuft die nach außen orientierte, am ersten Aufnahmeschenkel 9a angeordnete angeschrägte Anlagefläche 46a ausgehend von dem freien Ende 10 des Aufnahmeschenkels 9a vertikal nach unten, d.h., die Schrägung verläuft ausgehend von dem freien Ende 10 auf die Anlagefläche 33a der Reibnase 33 zu.

In der in der Figur 8b dargestellten innenseitigen Ansicht ist deutlich erkennbar, dass die Anlagefläche 46b am zweiten Aufnahmeschenkel 9b ausgehend von dem freien Ende 10 des Aufnahmeschenkels 9b in vertikaler Richtung nach oben ansteigt, d.h., sie läuft ausgehend von dem freien Ende 10 von der Anlagefläche 33a der Reibnase 33 weg.

Allgemeiner ausgedrückt sind die Schrägen so angeordnet, dass die Materialstärke der Schenkel 9a und 9b in Drehrichtung der Drehung von Position 2 in Position 1 wächst.

Die schrägen Anlageflächen 46a, 46b an den Aufnahmeschenkeln 9a, 9b der Tragspange bewirken zum einen eine besonders sichere und einfache Verspannung durch die handhabende Person. Zum anderen liegen die Reibnasen 33 zumindest linienförmlich mit ihren Anlageflächen 33a an den Anlageflächen 46a, 46b der Aufnahmeschenkel 9a, 9b an, wodurch eine besonders gute Druckverteilung entsteht und auftretende Verschleißerscheinungen minimiert werden. Zudem wird beispielsweise auch das Entstehen von Graten beim Drehen der Reibvorrichtungen 13 verhindert. Ergänzend zu den schrägen Anlageflächen 46a, 46b können die Reibnasen 33 und die Aufnahmearme 9a, 9b beispielsweise zusätzliche Fasen an den Kanten aufweisen.

Besonders bevorzugt werden die Trägerspange 7 und/oder der Reibkörper 12 aus besonders verschleißfestem Werkstoff, beispielsweise einem harten oder härtbaren Werkstoff hergestellt.

Während die Anlageflächen 33a der Reibnasen 33 weitestgehend rechtwinklig (ca. 90°) zur Drehachse ausgebildet sind, weisen die schrägen Anlageflächen 46a, 46b der Tragspange 7 vorzugsweise einen Winkel von ca. 95° bis 120° zur Drehachsenrichtung Z oder einen Winkel von 5° bis 20° gegenüber der Unterseite 35 der Tragspange 7 auf.

Alternativ können die Anlageflächen 33a der Reibnasen 33 zu den schrägen Anlageflächen 46a, 46b der Aufnahmearme 9a, 9b korrespondierend, d.h. ebenfalls schräg ausgebildet sein, wodurch eine flächige Anlage der Anlageflächen 33a, 46a, 46b erreicht wird.

Es wird ausdrücklich darauf hingewiesen, dass die einzelnen dargestellten und beschriebenen alternativen Ausführungsformen von Bauteilen untereinander austauschbar sind, d.h. beispielsweise, dass der Reibkopf 11 aus Figur 1 mit den Ausführungsformen der Reibvorrichtung nach Figur 2-8b kombinierbar ist.

### Bezugszeichenliste

- 1: Bahnelement
- 2: obere Bahnelementebene
- 3: untere Bahnelementebene
- 4: Abstandshalter
- 5: Trägerelement
- 6: Reibvorrichtung erste
- 7: Tragspange
- 8: Unterseite untere Bahnelementebene
- 9a, 9b: Aufnahmeschenkel
- 10: freie Enden Aufnahmeschenkel
- 11: Reibkopf
- 12: Reibkörper
- 13: Reibfuß
- 14: Auszugssicherung
- 15: Sperrriegel
- 16: Sperrnase
- 17: Stützfläche Sperrnase
- 18: Unterseite obere Bahnelementebene
- 19: Lagerführung Reibkopf
- 20: oberer Scherbenschutz
- 21: Ausnehmung obere Bahnelementebene
- 22: Ausnehmung untere Bahnelementebene
- 23: Spannvorrichtung
- 24: freie Ende Reibkörper
- 25: Ausnehmung Lagerkörper
- 26: Federelemente Spannvorrichtung
- 27: Aufnahme am Reibkopf für Reibkörper
- 28: Steg
- 29: Grundkörper Reibkopf
- 30: Verdrehsicherung
- 31: Lücke
- 32: obere Reibnase
- 33: untere Reibnase
- 33a: Anlagefläche untere Reibnase
- 34: Oberseite untere Bahnelementebene
- 35: Unterseite Tragspange
- 36: unterer Scherbenschutz
- 37: Oberseite obere Bahnelementebene
- 38: Rastelement
- 39: Rastelementaufnahme
- 40: Positioniervorrichtung
- 41: Aufnahmebolzen
- 42: Bolzenaufnahme
- 43: Innenseite Bahnelement
- 44: Laschen
- 45: Stützarm
- 46a: Anlagefläche Tragspange
- 46b: Anlagefläche Tragspange
- 47: Trägerzapfen
- 48: Geländerträger
- 49: Oberseite Tragspange
- 50: Greifflächen

- Z: Drehachse

## Patentansprüche

1. Behältertransportanlage mit
- einem an einem Trägerelement (5) auswechselbar befestigbaren Bahnelement (1) zum Führen von Behältern, mit mindestens einer oberen und einer unteren Bahnelementebene (2, 3)
- einer zwischen mindestens zwei Stellungen drehbar um eine Drehachse (Z) an dem Bahnelement (1) gelagerten, einen Reibkörper (12) aufweisenden Reibvorrichtung (6), wobei in einer ersten Stellung die untere Bahnelementebene (3) mit dem Trägerelement (5) in Richtung der Drehachse (Z) fixiert und in einer zweiten Stellung das Bahnelement (1) von dem Trägerelement (5) in Richtung der Drehachse (Z) entnehmbar ist,
- **gekennzeichnet durch** eine Spannvorrichtung (23) zum Verspannen der Reibvorrichtung (6), wobei die Spannvorrichtung (23) unter Verwendung mindestens eines Federelementes der Spannvorrichtung (23) eine Torsionsspannung und/oder ein Drehmoment an mindestens einem Reibkörper (12) der Reibvorrichtung (6) erzeugt oder aufrechterhält.

2. Behältertransportanlage nach Anspruch 1, **dadurch gekennzeichnet, dass** die Reibvorrichtung (6) mehrteilig ausgebildet ist und den Reibkörper (12), einen Reibkopf (11) und/oder Reibfuß (13) aufweist.

3. Behältertransportanlage nach einem der vorherigen Ansprüche, **dadurch gekennzeichnet, dass** das mindestens eine Federelement (26) der Spannvorrichtung (23) am Reibkopf (11) und/oder am Reibkörper (11) und/oder am Reibfuß (13) ausgebildet oder angeordnet ist.

4. Behältertransportanlage nach Anspruch 1 oder 2, **dadurch gekennzeichnet, dass** das Federelement (26) zum Erzeugen der Torsionsspannung beabstandet zu einem freien Ende des Reibkörpers (12) angeordnet ist.

5. Behältertransportanlage nach einem der vorherigen Ansprüche, **dadurch gekennzeichnet, dass** die Reibvorrichtung (6) eine obere Reibnase (32) und eine untere Reibnase (33) aufweist, wobei die obere Reibnase (32) zum Eingriff an der Oberseite (34) der unteren Bahnelementebene (3) und die untere Reibnase (33) zum Eingriff an der Unterseite (35) des Trägerelementes (5) ausgebildet und angeordnet sind.

6. Behältertransportanlage nach Anspruch 3 oder 4, **dadurch gekennzeichnet, dass** an der Unterseite (35) des Trägerelementes (5) eine zur Drehachse (Z) der Reibvorrichtung (6) schräg ausgerichtete Anlagefläche 46a, 46b zur Anlage einer unteren Reibnase (33) des Reibfußes (13) aufweist.

7. Behältertransportanlage nach einem der vorherigen Ansprüche, **dadurch gekennzeichnet, dass** die Reibvorrichtung (6) eine Verdrehsicherung (30) gegen ein unbeabsichtigtes Verdrehen um die Drehachse (Z) aufweist.

8. Behältertransportanlage nach einem der vorherigen Ansprüche, **dadurch gekennzeichnet, dass** eine Auszugssicherung (14) zur Fixierung der Reibvorrichtung (6) an dem Bahnelement (1) in Drehachsenrichtung (Z) angeordnet ist.

9. Behältertransportanlage nach Anspruch 7, **dadurch gekennzeichnet, dass** die Verdrehsicherung (30) ein Rastelement (38) mit einer dazu korrespondierend ausgebildeten Rastelementaufnahme (39) aufweist.

10. Behältertransportanlage nach einem der vorhergehenden Ansprüche, **dadurch gekennzeichnet, dass** die Reibvorrichtung (6) mindestens einen Scherbenschutz (20, 36) aufweist.

## Claims

1. Container transport system comprising
- a track element (1) which can be secured in a replaceable manner to a support element (5) for guiding containers, with at least one upper and one lower track element plane (2, 3),
- a friction device (6) comprising a friction body (12), which is mounted on the track element (1) in a rotatable manner about a rotational axis (Z) between at least two positions, wherein, in a first position, the lower track element plane (3) is fixed to the support element (5) in the direction of the rotational axis (Z), and in a second position the track element (1) can be removed from the support element (5) in the direction of the rotational axis (Z),
**characterised by** a clamping device (23) for clamping the friction device (6), wherein the clamping device (23) generates or maintains a torsional stress and/or a torque on at least one friction body (12) of the friction device (6) by the use of at least one spring element of the clamping device (23).

2. Container transport system according to claim 1, **characterised in that** the friction device (6) is configured as multi-part, and the friction body (12) comprises a friction head (11) and/or friction foot (13).

3. Container transport system according to any one of the preceding claims, **characterised in that** the at least one spring element (26) of the clamping device (23) is formed or arranged at the friction head (11) and/or at the friction body (11) and/or at the friction foot (13).

4. Container transport system according to claim 1 or 2, **characterised in that** the spring element (26) for producing the torsion tension is formed or arranged at a distance interval from a free end of the friction body (12).

5. Container transport system according to any one of the preceding claims, **characterised in that** the friction device (6) comprises an upper friction nose (32) and a lower friction nose (33), wherein the upper friction nose (32) is configured and arranged such as to engage on the upper side (34) of the lower track element plane (3), and the lower friction nose (33) is configured and arranged such as to engage on the under side (35) of the support element (5).

6. Container transport system according to claim 3 or 4, **characterised in that**, on the under side (35) of the support element (5), a contact surface 46a, 46b is provided, oriented obliquely to the rotational axis (Z) of the friction device (6) for coming in contact with a lower friction nose (33) of the friction foot (13).

7. Container transport system according to any one of the preceding claims, **characterised in that** the friction device (6) comprises a rotation securing element (30) against unintentional rotation about the rotational axis (Z).

8. Container transport system according to any one of the preceding claims, **characterised in that** an extraction securing element (14) for fixing the friction device (6) is arranged at the track element (1) in the rotational axis direction (Z).

9. Container transport system according to claim 7, **characterised in that** the rotation securing element (30) comprises an engagement element (38), with an engagement element receiver (39) configured such as to correspond to it.

10. Container transport system according to any one of the preceding claims, **characterised in that** the friction device (6) comprises at least one shard protection element (20, 36).

## Revendications

1. Installation de transport de contenants avec :
- un élément de bande (1) pouvant être fixé de manière interchangeable sur un élément de support (5), destiné à guider des contenants, avec au moins un plan d'élément de bande supérieur et un plan d'élément de bande inférieur (2, 3),
- un dispositif de frottement (6) monté de manière à pouvoir tourner autour d'un axe de rotation (Z) sur l'élément de bande (1) entre au moins deux positions, présentant un corps de frottement (12), dans laquelle le plan d'élément de bande inférieur (3) est bloqué, dans une première position, avec l'élément de support (5) en direction de l'axe de rotation (Z) et l'élément de bande (1) peut être retiré, dans une deuxième position, de l'élément de support (5) en direction de l'axe de rotation (Z),
**caractérisée par** un dispositif de serrage (23) servant à assembler par serrage le dispositif de frottement (6), dans lequel le dispositif de serrage (23) génère ou maintient, en utilisant au moins un élément de ressort du dispositif de serrage (23), une tension de torsion et/ou un couple de rotation sur au moins un corps de frottement (12) du dispositif de frottement (6).

2. Installation de transport de contenants selon la revendication 1, **caractérisée en ce que** le dispositif de frottement (6) est réalisé en plusieurs parties et présente le corps de frottement (12), une tête de frottement (11) et/ou un pied de frottement (13).

3. Installation de transport de contenants selon l'une quelconque des revendications précédentes, **caractérisée en ce que** l'au moins un élément de ressort (26) du dispositif de serrage (23) est réalisé ou disposé sur la tête de frottement (11) et/ou sur le corps de frottement (11) et/ou sur le pied de frottement (13).

4. Installation de transport de contenants selon la revendication 1 ou 2, **caractérisée en ce que** l'élément de ressort (26) destiné à générer la tension de torsion est disposé à distance par rapport à une extrémité libre du corps de frottement (12).

5. Installation de transport de contenants selon l'une quelconque des revendications précédentes, **caractérisée en ce que** le dispositif de frottement (6) présente un ergot de frottement supérieur (32) et un ergot de frottement inférieur (33), dans laquelle l'ergot de frottement supérieur (32) est réalisé et disposé pour venir en prise avec le côté supérieur (34) du plan d'élément de bande inférieur (3) et l'ergot de frottement inférieur (33) est réalisé et disposé pour venir en prise avec le côté inférieur (35) de l'élément de support (5).

6. Installation de transport de contenants selon la revendication 3 ou 4, **caractérisée en ce qu'**est disposée, sur le côté inférieur (35) de l'élément de support (5), une surface d'appui (46a, 46b) orientée à l'oblique par rapport à l'axe de rotation (Z) du dispositif de frottement (6), destinée à l'appui d'un ergot de frottement inférieur (33) du pied de frottement (13).

7. Installation de transport de contenants selon l'une quelconque des revendications précédentes, **caractérisée en ce que** le dispositif de frottement (6) présente un blocage anti-rotation (30) pour empêcher toute rotation accidentelle autour de l'axe de rotation (Z).

8. Installation de transport de contenants selon l'une quelconque des revendications précédentes, **caractérisée en ce qu'**un blocage anti-extraction (14) destiné à bloquer le dispositif de frottement (6) est disposé sur l'élément de bande (1) dans la direction d'axe de rotation (Z).

9. Installation de transport de contenants selon la revendication 7, **caractérisée en ce que** le blocage anti-rotation (30) présente un élément d'enclenchement (38) avec un logement d'élément d'enclenchement (39) réalisé de manière correspondante.

10. Installation de transport de contenants selon l'une quelconque des revendications précédentes, **caractérisée en ce que** le dispositif de frottement (6) présente au moins une protection anti-bris (20, 36).
